# EUROPEAN PATENT APPLICATION

(11) **EP 3 828 098 A2**
(43) Date of publication of application: **02.06.2021**
(21) Application number: 20275173.1
(22) Date of filing: 20.11.2020
(51) Int. Cl.: B65D 27/38

(54) **PACKING CASE WITH TEAR STRIP, METHOD OF MANUFACTURING AND SPOOL**

(30) Priority: 26.11.2019 GB 201917197
(71) Applicant: Ready Case Ltd, Warminster, Wiltshire BA12 9DX (GB)
(72) Inventor: GATHERCOLE, James Timothy, Frome, Somerset BA11 2TU (GB); KELSO, David Charles, Woking, Surrey GU24 0LU (GB)
(74) Representative: Potter Clarkson

(57) **Abstract**

A packing case (100) blank including an opening device comprising a paper tear strip (102) attached to the blank by a layer of adhesive (105).

## Description

### BACKGROUND

With the growth of online shopping, there is a large demand for packaging products that online retailers can ship their goods in. Such packaging must be available in a range of shapes, sizes and strengths, and it must be possible to fully manufacture and assemble it on a high speed production line using machines. Additionally, the packaging should be easy for the customer to open.

It is known to provide packing cases with plastic tear strips, such as the Scotch® Tear Strip Tape manufactured by 3M™ under the product code 8626, to enable easy opening. Such tear strips feature a pre-applied adhesive layer and are attached to a surface of a packing case in such a way that when the users pulls an end of the tear strip, the tear strip tears through the packing case to thereby create an opening in the packing case. The 3M™ 8626 Scotch Tear Strip Tape is made of polypropylene with a synthetic rubber resin adhesive. Other examples of plastic tear strips include Rippatape®.

It is also known to provide a packing case with a pair of substantially parallel perforation lines that span a flap or panel of the packing case, thereby forming a tearable strip in the packing case such that when a user pulls an end of the tearable strip, the tearable strip dissociates from the remainder of packing case, thereby creating an opening in the packing case. However, such tearable strips negatively affect the structural integrity the packing case by creating lines of weakness, and the packing case can become partially or wholly opened in transit.

These "easy-open" devices allow a packing case to be opened without any additional tools, such as a knife or a pair of scissors. Moreover, opening a packing case with such easy-open devices mitigates the risk of the contents of the packing case being damaged by a knife blade or scissor blades during opening.

### SUMMARY OF THE INVENTION

According to a first aspect, there is provided a packing case blank including an opening device comprising a biodegradable paper tear strip attached to the blank by a layer of adhesive.

A packing case formed from such a blank is easy to open and wholly recyclable without the need for perforations.

Conventional tear strip tapes are generally made of plastic and comprise a pre-applied adhesive, which is normally an oil-based adhesive. Plastic tear strip tapes and oil-based adhesives are non-biodegradable and cannot be easily recycled, meaning they must be separated out when the packing case is recycled. Such separation is often performed manually, which can be costly and time-consuming. This is especially problematic when packing cases are sent for recycling without the tear strip tapes having been used/removed, as the tear strip tapes are then not easily separable.

In contrast, the paper tear strip of the first aspect is biodegradable and easily recyclable, and it can therefore be recycled with the rest of the packing case. Unlike tearable strips formed in a packing case by pairs of adjacent perforations, an opening device comprising a biodegradable paper tear strip does not adversely affect the structural integrity the packing case.

A skilled person will understand that in the context of the present invention, the term biodegradable means the tear strip is capable of being decomposed by bacteria or other living organisms, thereby avoiding pollution.

The paper tear strip may also be referred to as a paper release tape, paper shear tape, paper shear strip, paper tear tape or paper tear strip tape, although unlike conventional tear strip tapes, the paper tear strip of the first aspect does not require a pre-applied adhesive, i.e. the adhesive can instead be applied to the packing case blank during manufacture.

The term packing case blank refers to a packing case that is at any stage of manufacture, and should also be understood to include a completed packing case.

Preferably, the biodegradable paper tear strip consists essentially of paper.

One skilled in the art will appreciate that for the tear strip to be biodegradable and easily recyclable, it must not contain any non-biodegradable components or any components that are difficult to separate and/or recycle. For example, the plastic and glass fibres present in fibre-reinforced paper are not biodegradable or easily recyclable and would therefore be unsuitable for achieving the object of the present invention. Therefore, the biodegradable paper tear strip is not fibre-reinforced (i.e. not fibre-reinforced paper, which the skilled person will understand to refer to paper that has been strengthened with glass or plastic fibres and is not biodegradable).

Preferably, the biodegradable paper tear strip is attached to the blank along the majority of a length of the biodegradable paper tear strip.

Preferably, fibres of the biodegradable paper tear strip are biased along a pull direction of the biodegradable paper tear strip.

In other words, the fibres of the paper are laid down with a higher percentage of the fibres orientated along the direction that the strip is cut. That it, it is the fibres of the paper itself (not reinforcing plastic or glass fibres as commonly found in fibre-reinforced paper) that are biased along the pull direction of the tear strip.

Having the fibres biased along the pull direction (i.e. along the length of the paper tear strip) increases the tensile strength of the biodegradable paper tear strip for a given width and density of the paper tear strip, thereby reducing the risk that the biodegradable paper tear strip tears or otherwise breaks when used to open the packing case.

Preferably, the biodegradable paper tear strip is elongate along the pull direction of the tear strip.

In other words, the biodegradable paper tear strip is preferably long in relation to its width.

Preferably, the adhesive is a water-based adhesive.

Water-based adhesives are biodegradable and are less contaminating to recycling processes than other types of adhesives such as the oil-based adhesives used in conventional tear strip tapes.

Preferably, the adhesive is PVA.

PVA may also be referred to as PVA glue, PVA emulsion, polyvinyl acetate, PVAc, or polyethenyl ethanoate. PVA is easy to put down and has a good tack. PVA integrates into the substrate of the packing case blank onto which it is applied, thereby forming a bond through mechanical adhesion rather than just specific adhesion.

Alternatively, the adhesive may be a gum-based adhesive.

Alternative adhesives can also be used, such as hot melt adhesive.

Preferably, a density of the paper strip is between 125 GSM and 200 GSM.

This ensures that the biodegradable paper tear strip is of a sufficient strength to enable it to be pulled through the material of the packing case.

Preferably, a width of the paper strip is between 4 mm and 10 mm, preferably between 5 mm and 7 mm, and most preferably 6 mm.

This ensures that the biodegradable paper tear strip is of a sufficient strength to enable it to be pulled through the material of the packing case.

Preferably, the blank further comprises one or more perforations, e.g. a pair of perforations, arranged at an end of the biodegradable paper tear strip on opposing sides of the biodegradable paper tear strip, thereby to form a pull-tab. The pull-tab may also be referred to simply as a tab. The pull-tab makes it easier for a user to pull the tear strip. Optionally, a second pull-tab can be arranged at an opposing end of the biodegradable paper tear strip. The perforations may be formed as part of a die cutting process. Unlike tearable strips formed by a pair of perforations, the perforations used to form a pull tab do not span a panel or flap of the packing case blank.

Preferably, the blank is a cartonboard blank or a corrugated fibreboard blank.

Typically the biodegradable paper tear strip will be laid down in a direction perpendicular to the direction of the corrugations in the board, and the paper facings of the corrugated board will have their fibre orientation in the more common random orientation or with an orientation biased slightly against the vertical stack direction of the pack.

Preferably, the biodegradable paper tear strip is made of kraft paper.

Kraft paper is largely virgin paper made predominantly from kraft pulp. Using kraft paper ensures that the biodegradable paper tear strip is of a sufficient quality to enable it to be pulled through the material of the packing case.

According to a second aspect, there is provided a packing case formed from the blank of the first aspect.

According to a third aspect, there is provided a method of manufacturing a packing case blank, comprising: applying a layer of adhesive to the blank; and, applying a (biodegradable) paper tear strip to the layer of adhesive, thereby to attach the paper tear strip to the blank.

Packing case blanks manufactured using this method are easy to open and wholly recyclable without the need for perforations.

By using a separate adhesive applied at the moment of manufacture, the formulation of the adhesive can be easily changed depending on the packing case requirements. In addition, applying an adhesive directly to the packing case blank has the potential to reduce waste as unused strips can more easily be re-wound onto a bobbin at the end of a manufacturing run, unlike with conventional tear strip tape, which has a pre-applied adhesive.

In addition, by applying the adhesive separately, higher application speeds can be achieved. The adhesive is applied to the packing case blank during manufacture and is not pre-applied to the paper tear strip, so the paper tear strip can be drawn from a bobbin more quickly than a tear strip tape with a pre-applied adhesive.

An additional benefit of this method is that the paper tear strip has a longer shelf life than conventional tear strip tapes, as the pre-applied adhesive on conventional tear strip tapes can deteriorate over time.

This method can be performed as part of the in-line process on a gluing and finishing machine, or it could be performed for example on a dedicated applicator machine.

Preferably, applying the layer of adhesive comprises spraying the adhesive.

The adhesive may be sprayed from a fine spray glue head, thereby forming beads of adhesive.

Alternative, applying the adhesive may comprise applying the adhesive with a wheel or roller.

Preferably, the adhesive and/or the paper tear strip are applied while the packing case blank is moving.

Preferably, the paper tear strip is attached to the blank along the majority of a length of the paper tear strip.

Preferably, the paper tear strip is applied with fibres of the paper tear strip biased along a pull direction of the tear strip.

In other words, the fibres of the paper are laid down with a higher percentage of the fibres orientated along the direction that the strip is cut.

Having the fibres biased along the pull direction (i.e. along the length of the paper tear strip) increases the tensile strength of the paper tear strip for a given width and density of paper tear strip, thereby reducing the risk that the paper tear strip tears or otherwise breaks when used to open the packing case.

Preferably, the paper tear strip is elongate along the pull direction of the tear strip.

In other words, the paper tear strip is preferably long in relation to its width.

Preferably, the adhesive is a water-based adhesive.

Water-based adhesives are biodegradable and are less contaminating to recycling processes than other types of adhesives such as oil-based adhesives used in conventional tear strip tapes.

Preferably, the adhesive is PVA.

PVA may also be referred to as PVA glue, PVA emulsion, polyvinyl acetate, PVAc, or polyethenyl ethanoate. PVA is easy to put down and has a good tack. PVA integrates into the substrate of the packing case blank onto which it is applied, thereby forming a bond through mechanical adhesion rather than just specific adhesion.

Alternatively, the adhesive may be a gum-based adhesive.

Alternative adhesives can also be used, such as hot melt adhesive.

Preferably, a density of the paper strip is between 125 GSM and 200 GSM.

This ensures that the paper tear strip is of a sufficient strength to enable it to be pulled through the material of the packing case.

Preferably, a width of the paper strip is between 4 mm and 10 mm, preferably between 5 mm and 7 mm, and most preferably 6 mm.

This ensures that the paper tear strip is of a sufficient strength to enable it to be pulled through the material of the packing case.

Preferably, the method comprises cutting a pair of perforations e.g. a pair of perforations, in the blank at an end of the paper tear strip on opposing sides of the paper tear strip, thereby to form a pull-tab.

The pull-tab may also be referred to simply as a tab. The pull-tab makes it easier for a user to pull the tear strip. Optionally, a second pull-tab can be arranged at an opposing end of the paper tear strip. The perforations may be formed as part of a die cutting process.

Preferably, the blank is a cartonboard blank or a corrugated fibreboard blank.

Typically the paper tear strip will be laid down in a direction perpendicular to the direction of the corrugations in the board. The paper facings of the corrugated board would have their fibre orientation in the more common random orientation or with an orientation biased slightly against the vertical stack direction of the pack.

Preferably, the paper tear strip is made of kraft paper.

Kraft paper is largely virgin paper made predominantly from kraft pulp. Using kraft paper ensures that the paper tear strip is of a sufficient quality to enable it to be pulled through the material of the packing case.

According to a fourth aspect, there is provided a spool of paper tear strip for forming an opening device for cartonboard or corrugated fibreboard packaging material, the paper tear strip comprising a continuous length of paper having a density of between 125 GSM and 200 GSM and a width of between 4 mm and 10 mm.

The spool may also be referred to as a reel or bobbin. Multiple slitting blades can be used across several shafts to achieve such an unusually thin strip of paper. Multiple tensioning wheels can be employed to ensure that the thin strips cut from the paper reels can then be wound onto bobbins that can be used on application machinery.

Preferably, fibres of the paper tear strip are biased along a length of the tear strip.

Having the fibres biased along the length of the paper tear strip increases the tensile strength of the paper tear strip for a given width and density of paper tear strip.

Preferably, the width of the paper is between 5 mm and 7 mm, preferably 6 mm.

This ensures that the paper tear strip is of a sufficient strength to enable it to be pulled through the packaging material.

Preferably, the paper tear strip is made of kraft paper.

Kraft paper is largely virgin paper made predominantly from kraft pulp. Using kraft paper ensures that the paper tear strip is of a sufficient quality to enable it to be pulled through the packaging material.

According to a fifth aspect, there is provided a packing case blank including an opening device comprising a tear strip attached to the blank by a layer of adhesive, wherein the tear strip is formed from a biodegradable material.

Such a packing case is easy to open and wholly recyclable without the need for perforations.

The biodegradable material could be any suitable material, such as paper or fructose, and is ideally recyclable with the rest of the packing case.

The tear strip may also be referred to as a release tape, shear tape, shear strip, tear tape or tear strip tape.

### BRIEF DESCRIPTION OF DRAWINGS

Examples of the present invention will now be described in detail with reference to the accompanying drawings, in which:
Figure 1 shows a packing case including an opening device comprising a paper tear strip;
Figure 2 shows the packing case of Figure 1 in an open configuration;
Figure 3 shows a side view of the opening device of the packing case of Figure 1;
Figure 4 shows the packing case of Figure 1 in a closed configuration;
Figure 5 shows the paper tear strip of the packing case of Figure 1 being used to open the packing case;
Figure 6 shows the packing case of Figure 1 once the paper tear strip has been used to open the device;
Figure 7 shows a reel of paper tear strip;
Figure 8 shows a paper tear strip being applied to a packing case; and,
Figure 9 illustrates a method for applying a paper tear strip to a packing case.

### DETAILED DESCRIPTION

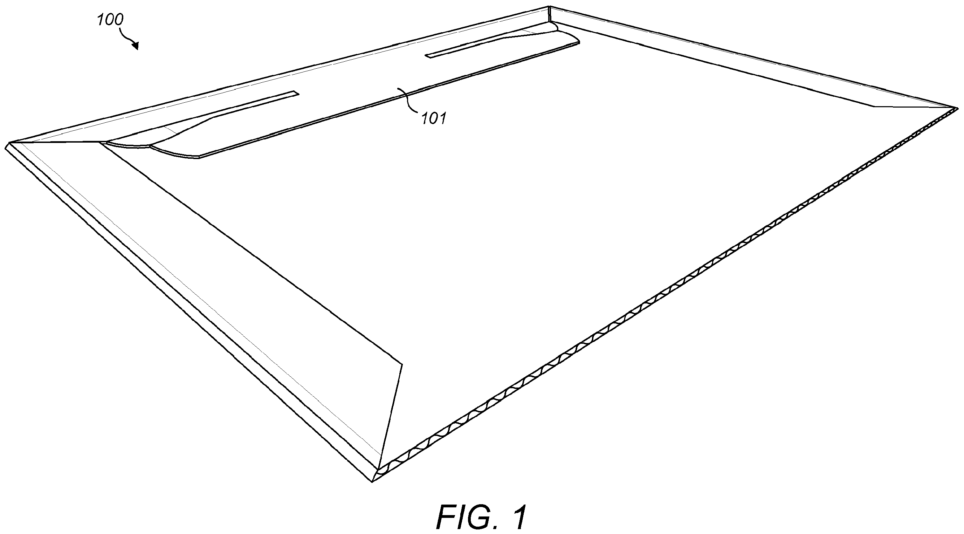

An embodiment of a packing case 100 is shown in Figure 1, comprising a flap 101 in a closed configuration. The packing case can be made of any suitable material, but in preferred embodiments a material of the packing case is cartonboard or corrugated fibreboard.

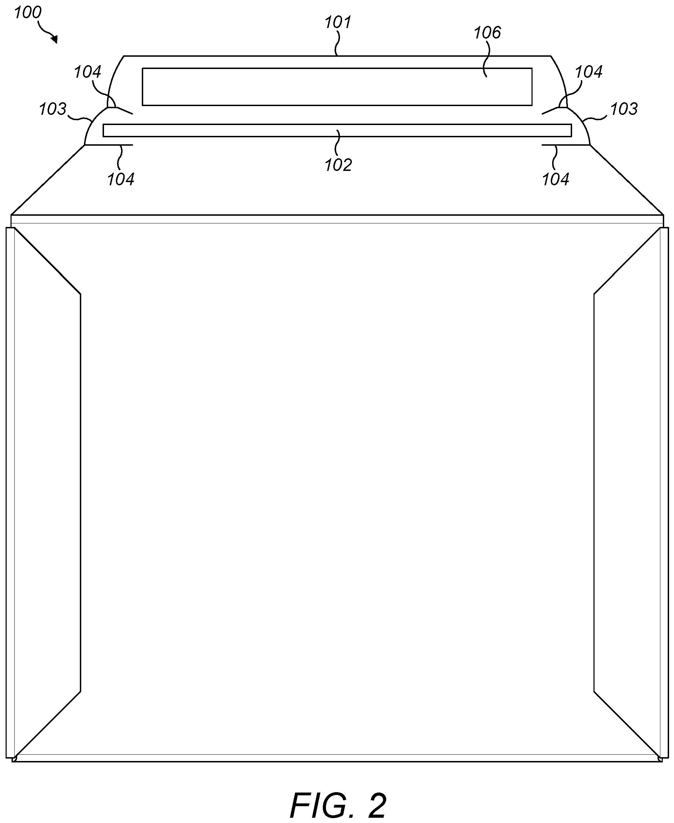

Figure 2 shows the packing case 100 with the flap 101 in an open configuration. The flap includes an opening device which comprises an elongate paper tear strip 102 adhered to an inner surface of the flap, with a pair of pull tabs 103 arranged at opposing ends of the paper tear strip 102. The pull tabs 103 are preferably each formed by a pair of perforations 104 in the flap arranged on opposing sides of the paper tear strip 102.

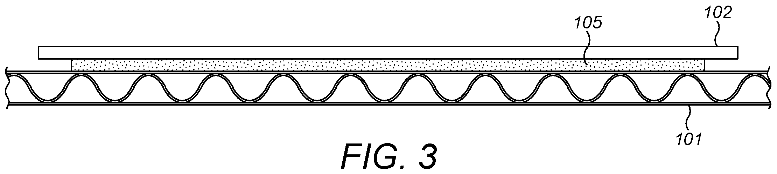

As shown in Figure 3, the paper tear strip 102 is affixed to the packing case 100 by a layer of adhesive 105. As will be described later, the adhesive 105 is preferably applied directly to the packing case 105 during manufacture, and is preferably a water-based adhesive such as PVA or a gum-based adhesive, the latter of which may require water activation.

In the illustrated embodiment, the paper tear strip 102 extends slightly beyond the adhesive 105, although alternative embodiments are envisaged in which the entire surface of the paper tear strip 102 is coupled to the adhesive.

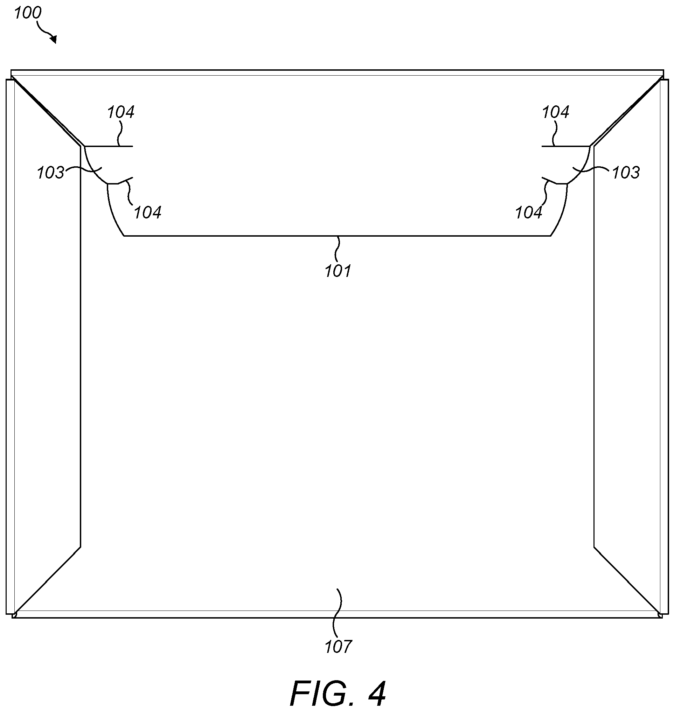

In use, once the packing case 100 has been packed, it is closed by folding the flap 101 and attaching it to a panel 107 of the packing case 100, preferably by means of an adhesive such as a pre-applied adhesive strip or sealing tape 106. The attachment between the flap 101 and the panel 107 is preferably strong enough such that the flap cannot be separated from the panel 107 once attached without damaging the packing case. The closed configuration of the packing case 100 is shown in Figure 4.

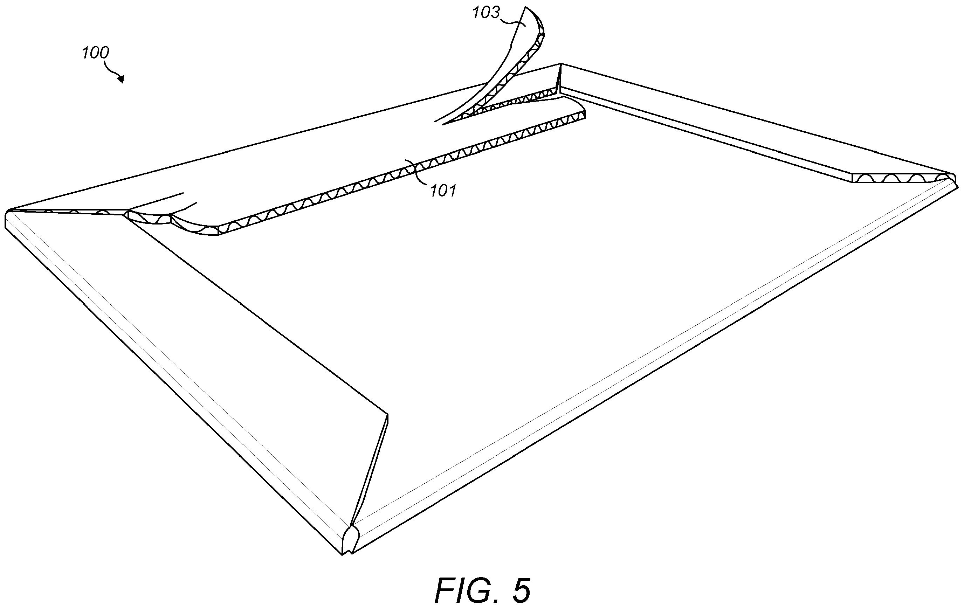

To open the packing case, the user grips and pulls one of the pull tabs 103 in a direction generally perpendicular to the outer surface of the flap 101, as shown in Figure 5. As the paper tear strip 102 is affixed to the pull tabs 103, pulling the pull tab 103 pulls the paper tear strip 102, thereby causing the paper tear strip 102 to tear through the packing case. In general, the substrate of packing case 100 to which the paper tear strip 102 is adhered will become dissociated from the rest of the packing case 100 during this process.

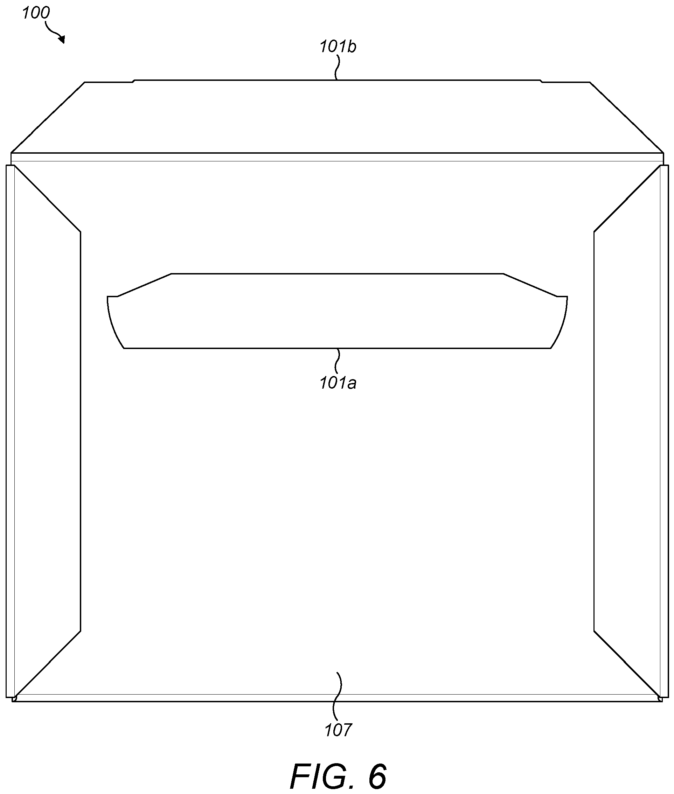

Once the paper tear strip 102 has been removed, a first portion 101a of the flap 101 remains adhered to the panel 107 of the packing case 100, as illustrated in Figure 6, and a second portion 101b of the flap 101 can be folded back, thereby to open the packing case 100.

When the paper tear strip 102 is pulled, it is placed under tension. The paper tear strip 102 should therefore have a shear tensile strength that is sufficient for it to tear through the underlying substrate of the packing case 100.

To increase the tensile strength of the paper tear strip 102, the fibres of the paper tear strip 102 are preferably biased along the pull direction of the paper tear strip 102. Increasing the tensile strength of the paper tear strip 102 in this way reduces the risk that the paper tear strip 102 tears or otherwise breaks during opening for a given width and density of paper.

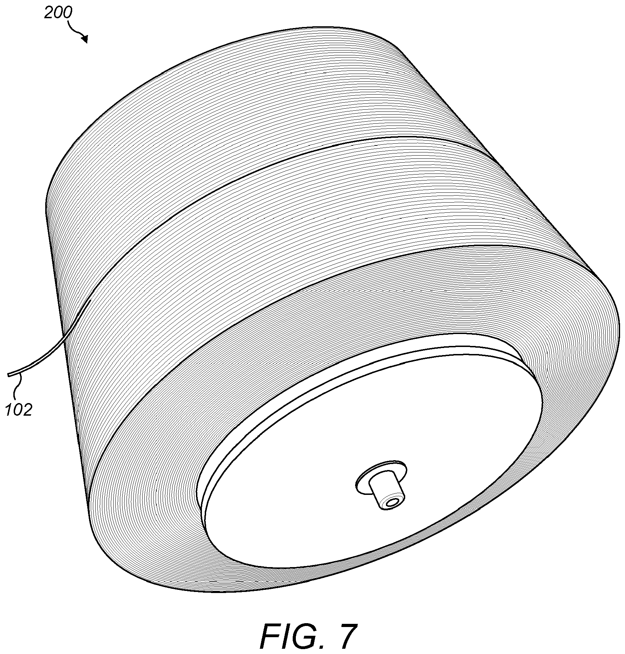

Figure 7 shows a reel 200 of paper tear strip 102 for use in the manufacture of the packing case 100. The paper tear strip 102 can be made of any suitably strong paper, but is preferably made of kraft paper having a density of between 125 GSM and 200 GSM and a width of between 4 mm and 10 mm. The exact width and paper density can be chosen depending on the material of the packing case 101; for example a thicker or strong material may require a paper tear strip 102 with a higher density or larger width in order to ensure it is strong enough to tear through the packing case 100.

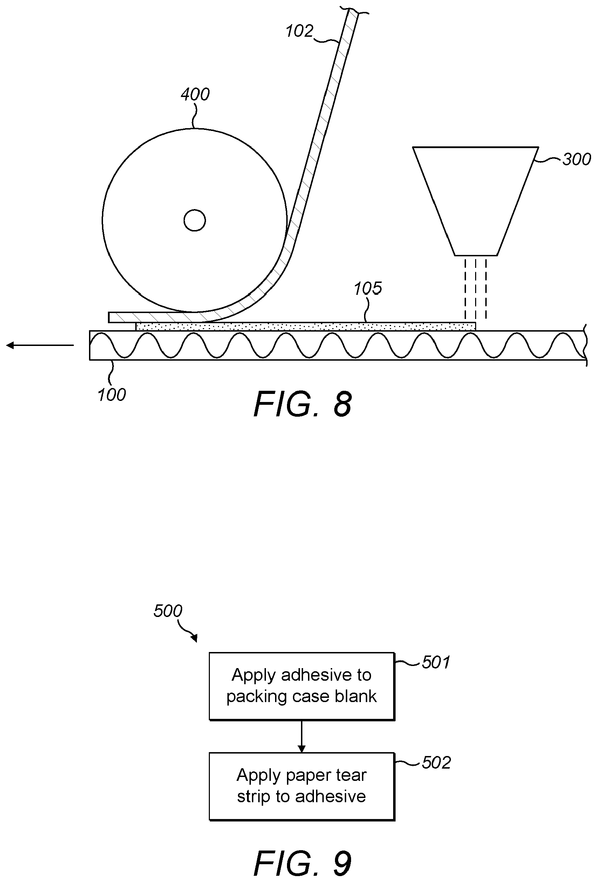

Figure 8 illustrates a paper tear strip 102 being applied to a packing case 100 or packing case blank, for example on a high speed production line. The arrow depicts the direction of movement of the packing case 100.

An adhesive applicator 300 is used to apply the adhesive 105 to a substrate of the packing case 100 or packing case blank. In the illustrated embodiment, the adhesive applicator is a spray nozzle that sprays an adhesive onto a predetermined substrate of the packing case 100. Alternative adhesive applicators 300 are also envisaged, such as rollers.

A tear strip applicator 400, in this case a roller, is then used to apply the paper tear strip 102 to the adhesive 105. The paper tear strip 102 will generally be drawn from a reel 200 or bobbin and cut to the required length before or during application, although it may also be possible to cut the paper tear strip 102 after application, for example by applying a continuous length of paper tear strip 102 to multiple packing cases and subsequently cutting the paper tear strip 102.

A method 500 for applying a paper tear strip 102 to a packing case 100 or packing case blank is shown in Figure 9.

At step 501, the adhesive 105 is applied to a substrate of the packing case 100 or packing case blank. This can be applied using an adhesive applicator 300 such as a spray nozzle or a roller. As described above, the adhesive 105 could be a water-based adhesive such as PVA, or it may alternatively be any other suitable adhesive, such as a gum based adhesive.

Applying an adhesive 105 separately to a tear strip goes against conventional methods, which instead use a tear strip tape with a pre-applied adhesive.

At step 502, the paper tear strip 102 is applied to the adhesive 105. This may be applied using a tear strip applicator 400 such as a roller, and the paper tear strip 102 may be drawn from a reel 200 or bobbin and cut to the required length as necessary.

Although the above description has been given in the context of a paper tear strip 102 affixed adjacent to a pre-applied adhesive strip or sealing tape 106 on a closable flap 101, the paper tear strip 102 could equally be applied to other panels of the packing case 100, such as those that are glued during manufacture rather than when the packing case 100 is packed.

Equally, although the opening device has been described in relation to an envelope-style packing case, the paper tear strip 102 can be applied to any suitable packing case, including wraparound packing cases. The paper tear strip 102 can be used as a replacement for any conventional tear strip.

## Claims

1. A packing case blank including an opening device comprising a biodegradable paper tear strip attached to the blank by a layer of adhesive.

2. The blank of claim 1, wherein the biodegradable paper tear strip is attached to the blank along the majority of a length of the biodegradable paper tear strip.

3. The blank of claim 1 or claim 2, wherein fibres of the biodegradable paper tear strip are biased along a pull direction of the biodegradable paper tear strip.

4. The blank of any preceding claim, wherein the biodegradable paper tear strip is elongate along the pull direction of the biodegradable paper tear strip.

5. The blank of any preceding claim, wherein the adhesive is a water-based adhesive.

6. The blank of any preceding claim, wherein the adhesive is PVA or a gum-based adhesive.

7. The blank of any preceding claim, wherein a density of the biodegradable paper strip is between 125 GSM and 200 GSM.

8. The blank of any preceding claim, wherein a width of the biodegradable paper strip is between 4 mm and 10 mm, preferably between 5 mm and 7 mm, and most preferably 6 mm.

9. The blank of any preceding claim, further comprising one or more perforations arranged at an end of the biodegradable paper tear strip on opposing sides of the biodegradable paper tear strip, thereby to form a pull-tab.

10. The blank of any preceding claim, wherein the blank is a cartonboard blank or a corrugated fibreboard blank.

11. The blank of any preceding claim, wherein the biodegradable paper tear strip is made of kraft paper.

12. A packing case formed from the blank of any preceding claim.

13. A method of manufacturing a packing case blank, comprising:
applying a layer of adhesive to the blank; and,
applying a paper tear strip to the layer of adhesive, thereby to attach the paper tear strip to the blank.

14. The method of claim 13, wherein applying the layer of adhesive comprises spraying the adhesive or applying the adhesive with a wheel or roller.

15. A spool of biodegradable paper tear strip for forming an opening device for cartonboard or corrugated fibreboard packaging material, the biodegradable paper tear strip comprising a continuous length of paper having a density of between 125 GSM and 200 GSM and a width of between 4 mm and 10 mm.
